# EUROPEAN PATENT APPLICATION

(11) **EP 1 252 809 A2**
(43) Date of publication of application: **30.10.2002**
(21) Application number: 02009122.9
(22) Date of filing: 24.04.2002
(51) Int. Cl.: A01D 34/68

(54) **Walk-behind implement having forward and reverse drives and a method of operation therefor**

(30) Priority: 25.04.2001 US 286414 P
(71) Applicant: TECUMSEH PRODUCTS COMPANY, Tecumseh Michigan 49286 (US)
(72) Inventor: Cox, Paul C., Sellersburg, Indiana 47172 (US); Johnson, Kevin L., Douglas, Georgia 31533 (US); Boyer, Scott G., Borden, Indiana 47106 (US); Ruebusch, Richard T., New Albany, Indiana 47150 (US); Herrick, Todd W., Tecumseh, Michigan 49286 (US)
(74) Representative: Dr. Weitzel & Partner

(57) **Abstract**

A walk-behind self-propelled implement (20a, 20b, 20c), such as a snow thrower (20a, 20b) or lawnmower (20c), for example, is provided. The implement includes first and second transmission modules (128, 130) associated with a common single axle (142) to which a pair of drive wheels (24a, 24b, 24c) is attached. The first and second transmission modules are operable exclusively with respect to one another to drive the axle and the wheels in a forward and reverse direction, respectively. A control member (262) mounted to the handle (30) of the implement includes a forward bail member (264) pivotable to rotate the control member in a first direction to urge the wheel to rotate in a forward direction, and a reverse bail member (266) pivotable to rotate the control member in a second direction opposite the first direction to urge the wheel to rotate in a reverse direction.

## Description

The present invention relates to walk-behind self-propelled implements intended primarily for use as lawnmowers, snow throwers, cultivators and the like, but may also be .applied to larger implements and vehicles.

Lawn and garden implements, for example, mowers, tillers and snow throwers, often include a transaxle through which power from an engine is transmitted to ground-engaging wheels attached to axles extending from the transaxle for propelling the implement. Typically, the drive source operates at a single, rotary mechanical speed and propels the implement in a forward direction under manual control by an operator. Additionally, the drive source is operably coupled to a working device, such as a blade or auger assembly, for example, and may be disengaged or placed in a neutral condition by the operator via a control lever provided on the implement handle.

Single stage snow throwers are generally less expensive relative to their two-stage counterparts. Propulsion of single stage snow throwers is generally dependant upon substantial operator intervention to move the implement in a forward or reverse direction. For example, single stage snow throwers are typically propelled forward by the auger rather than through mechanical rotation and propulsion of the wheel(s). Snow thrower speed is controlled as the operator exerts an upward force on the handle to increase traction between the auger and the ground to propel the implement forward. Since the movement of the implement is substantially dependant on the engagement between the auger and the ground, it is common for the implement to not track straight. Furthermore, since the auger is driven in a single direction to effect a forward motion of the implement, the single stage snow thrower is not equipped to drive the implement in a reverse direction, and must be pulled rearward by the operator.

There is a need for a simple, inexpensive implement such as a snow thrower, which may be propelled along a substantially straight direction in both forward and reverse directions, and which also allows for engagement and disengagement of the working device. Furthermore, an inexpensive implement is desirable which includes a single control member to selectively control wheel direction, and which is not complicated to operate.

The present invention overcomes the disadvantages of prior walk-behind implements by providing a walk-behind implement including a selectively engageable working device and a pair of inexpensive transmission modules engageable with a common axle to allow both forward and reverse movement of the implement through a control assembly provided on the implement handle.

In one form thereof, the present invention provides a walk-behind self-propelled implement, including a frame; a power source mounted to the frame, the power source having a rotating output shaft; an axle rotatably supported by the frame; at least one drive wheel attached to the axle; a first transmission module associated with the axle and operable to transfer rotation of the output shaft to the axle in a forward direction; and a second transmission module associated with the axle and operable to transfer rotation of the output shaft to the axle in a reverse direction, wherein the first and second transmission modules are operable exclusively of one another.

In another form thereof, the present invention provides a walk-behind self-propelled implement, including a frame; a handle attached to the frame; a power source mounted to the frame; an axle rotatably supported by the frame, the power source drivingly coupled to the axle; at least one drive wheel attached to the axle; and a control member rotatably attached to the handle, the control member including a forward bail member pivotable to rotate the control member in a first direction to urge the wheel to rotate in a forward direction, and a reverse bail member pivotable to rotate the control member in a second direction opposite the first direction to urge the wheel to rotate in a reverse direction.

In a further form thereof, the present invention provides a method of operating a self-propelled walk-behind implement, including the steps of moving a control member in a first rotational direction to operably engage only a first transmission module and effect forward movement of the implement; and reversibly rotating the control member to operably engage only a second transmission module and effect reverse movement of the implement.

The above-mentioned and other features and objects of this invention, and the manner of attaining them, will become more apparent and the invention itself will be better understood by reference to the following description of the invention taken in conjunction with the accompanying drawings, wherein:

Fig. 1A is a perspective view of a first embodiment of a walk-behind implement according to the present invention;

Fig. 1B is a perspective view of a second embodiment of a walk-behind implement according to the present invention;

Fig. 2 is a perspective view of a third embodiment of a walk-behind implement according to the present invention;

Fig. 3 is a perspective view of the implement of Fig. 1A, shown with a portion of the housing, the shroud and snow discharge chute removed;

Fig. 4 is an enlarged side view of the working device drive mechanism of the implement of Fig. 3;

Fig. 5A is a schematic of the implement of Fig. 3, showing the control assembly connected with corresponding wheel and working device drive mechanisms;

Fig. 5B is a schematic of the implement of Fig. 1B, showing the control assembly connected with corresponding wheel and working device drive mechanisms;

Fig. 6A is a bottom view of the implement of Fig. 3;

Fig. 6B is a bottom view of the implement of Fig. 5B;

Fig. 7 is a fragmentary top view of the implement of Fig. 3, showing the pair of transmission modules from just above their respective sheaves;

Fig. 8 is a sectional view taken along line 8-8 of Fig. 7, showing the construction of each transmission module and showing the arrangement between each intermeshed wheel and axle gear.

Fig. 9 is an exploded view of one of the transmission modules of the implement of Fig. 3;

Fig. 10 is an enlarged view of the encircled area of Fig. 8;

Fig. 11 is a fragmentary view of the implement of Fig. 1A, showing the controls;

Fig. 12 is an enlarged view of the encircled area of Fig. 11;

Fig. 13 is an enlarged fragmentary view of the handle and controls of the implement of Fig. 1A, showing the working device activation control member;

Fig. 14 is a sectional view of the implement of Fig. 1A, taken along line 14-14 of Fig. 1A, showing the control assembly in a disengaged and neutral condition;

Fig. 15 is the implement of Fig. 14, showing the working device activation control member in an engaged position and the drive control member in a disengaged position;

Fig. 16 is the implement of Fig. 14, showing the working device activation control member in an engaged position and the drive control member in an engaged position to propel the implement forward;

Fig. 17 is the implement of Fig. 14, showing the working device activation control member in a disengaged position and the drive control member in an engaged position to propel the implement in reverse;

Fig. 18 is the implement of Fig. 14, showing the working device activation control member in an engaged position and the drive control member in a partially engaged position; and

Fig. 19 is fragmentary perspective of a fourth embodiment of a walk-behind implement according to the present invention, showing a modified drive control member and its attachment with the forward and reverse cable assemblies.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate embodiments of the invention, and such exemplifications are not to be construed as being exhaustive or to limit the scope of the invention in any manner.

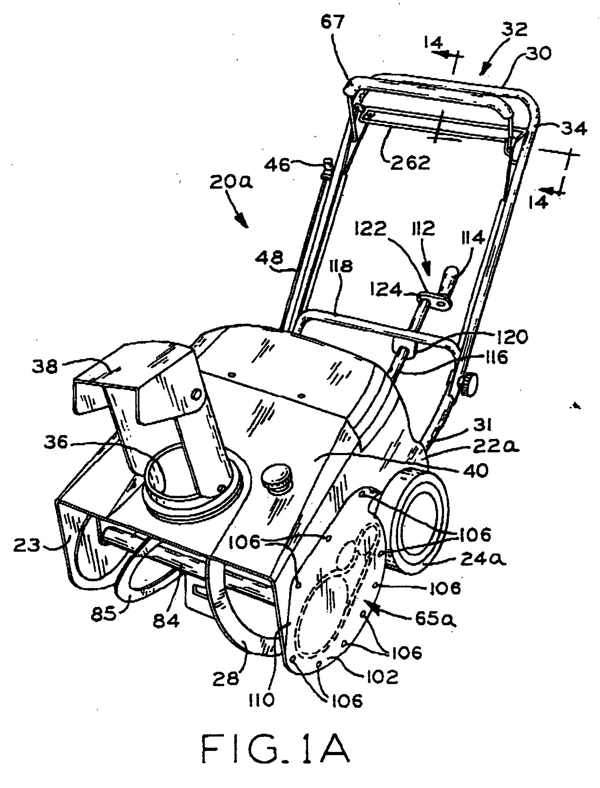

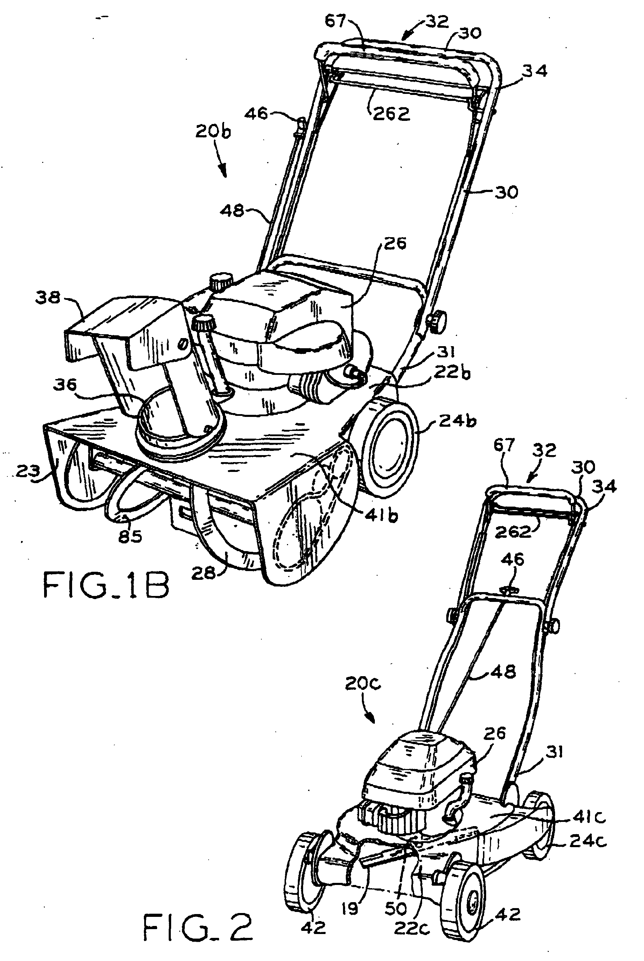

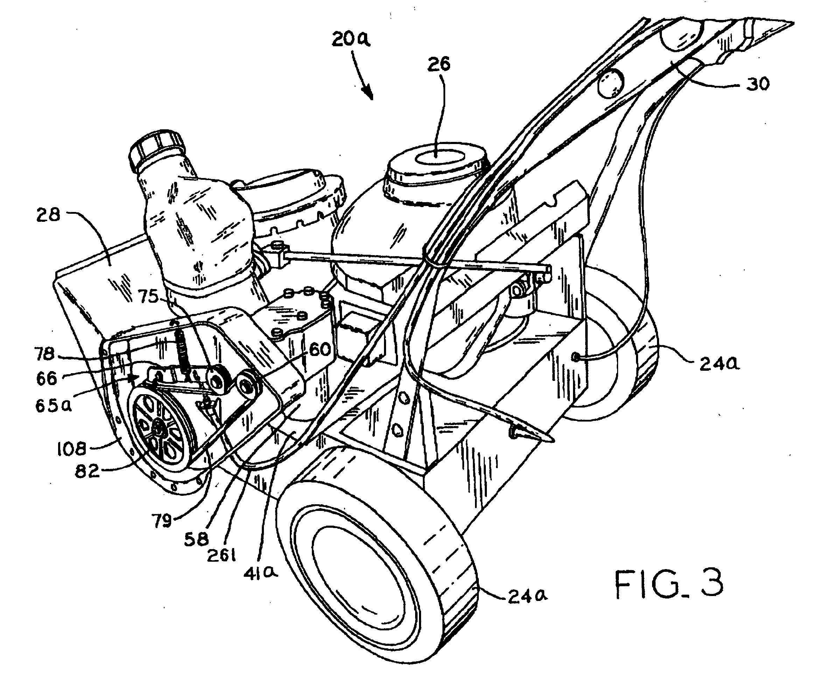

Referring to Fig. 1A, a first embodiment of a walk-behind implement according to the present invention is shown in the form of a snow thrower. Snow thrower 20a includes frame 22a and a pair of ground engaging wheels 24a rotatably attached thereto. Frame 22a includes a substantially horizontal deck 41a (Fig. 3) which supports engine 26 (Figs. 1B, 2). The working device or auger assembly includes auger 28 having a rotating blade. Auger 28 is rotatably supported by frame 22a and rotates within snow receiving opening 23 of frame 22a. Engine 26 is operably engaged to ground engaging wheels 24a to propel implement 20a in either a forward or reverse direction. Control assembly 32 is provided on handle 30 and handle 30 includes first end 31 attached to frame 22a and second end 34 projected outwardly therefrom. Snow received into opening 23 is discharged by auger 28 through discharge nozzle 36 and deflected by deflection chute 38. Snow thrower 20a includes an engine enclosing shroud 40.

Referring to Fig. 1B, a second embodiment of a snow thrower according to the present invention is shown and differs from snow thrower 20a in several aspects. Certain elements include reference numerals having a different letter (e.g., 20a and 20b) appended thereto which indicates that the corresponding element previously described in the first embodiment has been modified. As shown, snow thrower 20b lacks a shroud, and the auger and wheel drive mechanisms thereof are substantially enclosed underneath deck 41b, or within frame 22b as described below.

Referring to Fig. 2, a third embodiment walk-behind implement according to the present invention is shown in the form of a lawn mower, including rotating blade 19 mounted on output shaft 50 of engine 26. Mower 20c includes a pair of driven rear wheels 24c, and additionally, a pair of non-driven front wheels 42 rotatably attached to frame 22c. Similar to walk-behind implements 20a and 20b, walk-behind implement 20c includes a control assembly 32 to actuate the transfer of power from engine 26 to ground engaging wheels 24c, resulting in forward or reverse movement of the implement. Additionally, the control assembly allows an operator to engage or disengage a rotating blade (not shown) enclosed underneath deck 41c of frame 22c. Implements 20a, 20b and 20c may include a T-handle 46 connected to start cord 48 for starting engine 26. Alternatively, or additionally, an electric starter may be employed.

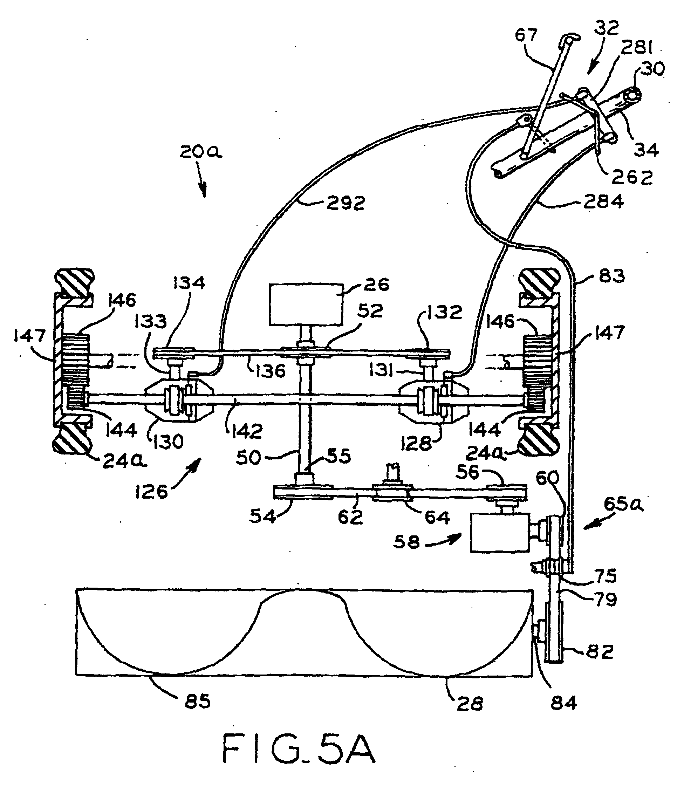

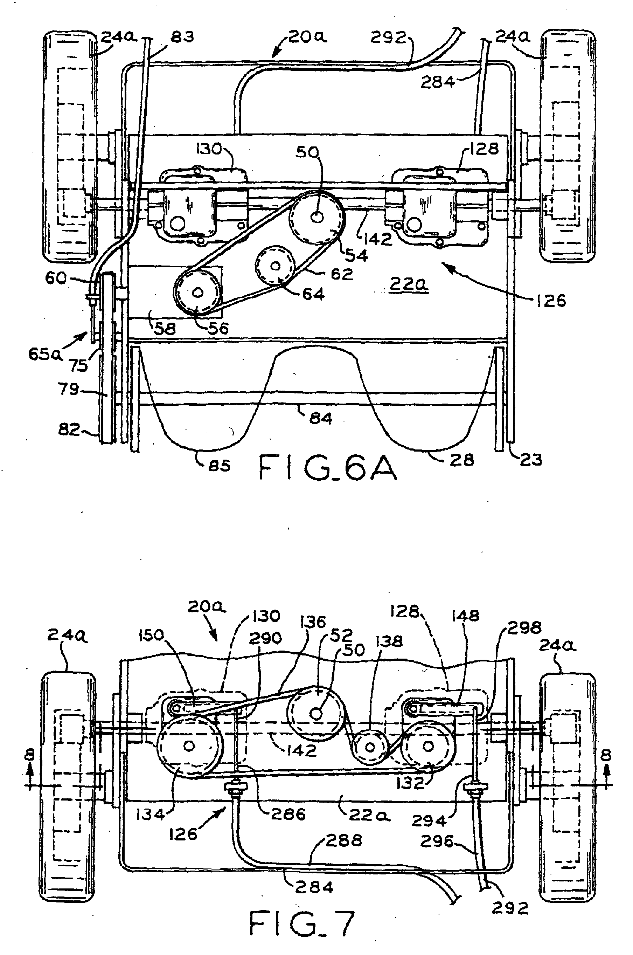

Referring to Fig. 5A, engine 26 of implement 20a includes vertically oriented output shaft 50, and wheel drive pulley 52 keyed to output shaft 50 through known means such as a Woodruff key, for example. A second pulley or power take off (PTO) pulley 54 is keyed to end 55 of output shaft 50. As best seen in Fig. 6A, PTO pulley 54 is in driving engagement with pulley 56 of right angle drive mechanism 58 through belt 62 engaged about the peripheries of pulleys 54 and 56. The output shaft of right angle drive mechanism 58 has a second pulley 60 attached thereto which is arranged substantially perpendicular relative to pulley 56. Tensioner 64 is fixed to frame 22a and is provided with an adjustable bracket (not shown) to provide a predetermined tension to belt 62 during assembly. Tensioner 64 may include a pulley assembly fixed to the adjustable bracket through a centrally located roller bearing assembly (not shown).

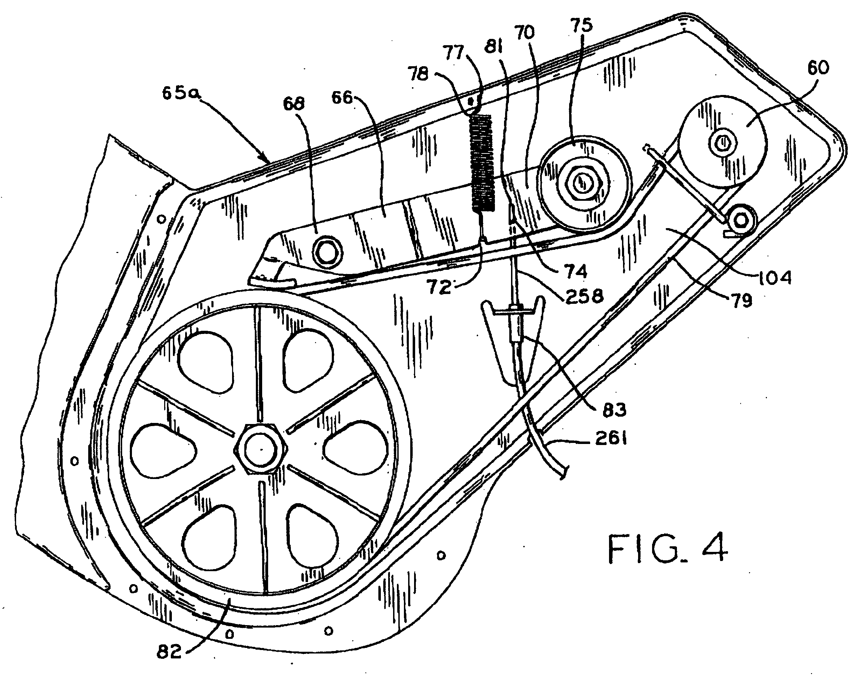

Referring to Figs. 3 and 4, rotation of engine output shaft 50 (Fig. 5A) causes rotation of auger 28 through working device drive mechanism 65a. Referring to Fig. 4, working device drive mechanism 65a includes pivot arm 66 having first and second ends 68 and 70 of which end 68 is pivotally attached to frame 22a and second end 70 is provided with tensioner pulley 74 rotatably attached thereto. Pivot arm 66 includes notch 72 which receives an end of tension spring 78; the other end of spring 78 is anchored to frame portion 77. Belt 79 is engaged with the peripheries of drive pulley 60 and auger pulley 82. Cable end 81 extends through aperture 74 in pivot arm 66 and is connected to corresponding cable assembly 83 to transfer operator movement of control assembly 32 (Fig. 5A) to pivoting movement of pivot arm 66 to rotatably engage auger 28. As best shown in Fig. 5A, auger pulley 82 is attached to an axial end of auger 28 and a centrally located auger drive shaft 84 provides support for auger blade 85 (Fig. 1) attached thereto. Auger 28 includes shaft 84 and blade 85.

Referring to Fig. 5A, drive mechanism 65a is activated through operator manipulation of control bail 67 located at second end 34 of handle portion 30 of implement 20a. When drive mechanism 65a is in a fully disengaged condition (not shown), tensioner pulley 75 rotatably attached to pivot arm 66 exerts little or no lateral force on belt 79 through pulley 75 and as a result rotation of drive pulley 60 has no effect on substantially loose and stationary belt 62, and hence, auger pulley 82 is not urged to rotate. In contrast, when the working device drive mechanism 65a is in an engaged condition, belt 62 is tensioned by pulley 75 (Figs. 3, 4). Accordingly, rotation of pulley 60 causes rotation of auger pulley 82 through belt 62 to thereby rotate auger 28.

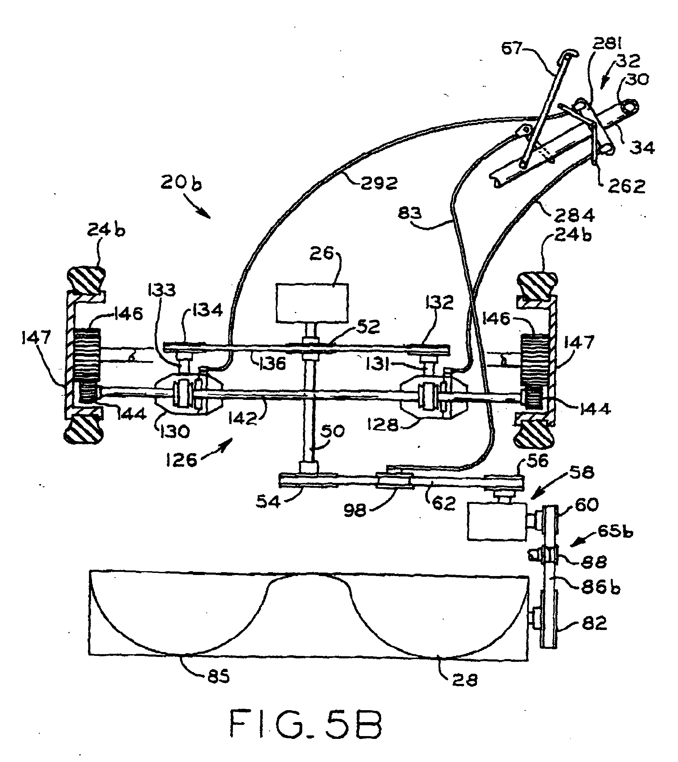

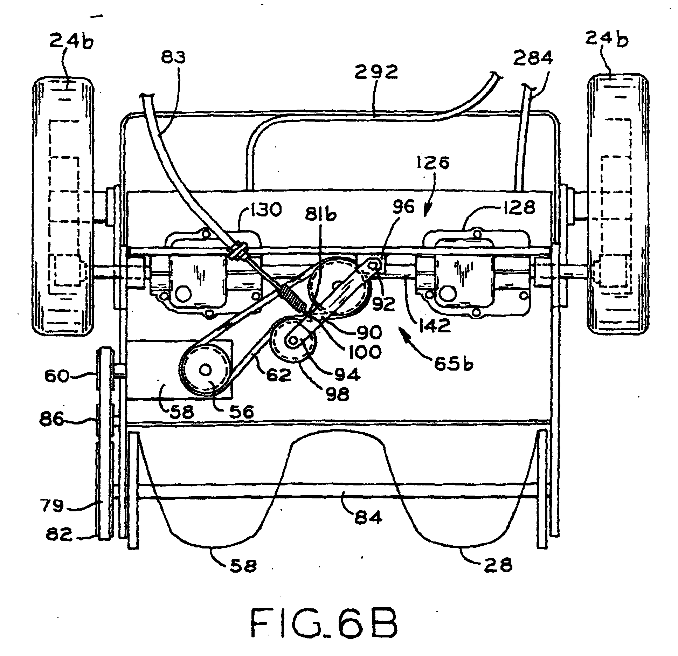

Referring to Fig. 5B, second embodiment snow thrower 20b is shown and includes working device drive mechanism 65b horizontally oriented and positioned underneath deck 41b of frame 22b (Fig. 1B). Drive mechanism 65b differs from working device drive mechanism 65a shown in Fig. 5A by including pivot arm 90 (Fig. 6B) acting on belt 62, which is engaged between power take off pulley 54 and the input pulley 56 of angle drive 58, through tensioner pulley 98. Referring to Fig. 6B, working device drive mechanism 65b includes pivot arm 90 having first and second ends 92 and 94 in which first end 92 is pivotally attached to base portion 96 and pulley 98 rotatably supported by second end 94 of arm 90. Cable end 81 extends through aperture 100 in pivot arm 90 to rotate pivot arm 90 and urge tensioner pulley 98 into engagement with belt 62 in response to user movement of control member 67 (Fig. 5B) of control assembly 32. It will be understood by those having ordinary skill in the art that auger pulley 82 is in direct driving engagement with pulley 60 of angle drive mechanism 58 through a predetermined tension effected on belt 86 by adjustably fixed tensioner pulley 88 attached to frame 22b.

Referring to Fig. 1A, implement 20a includes access panel 102 which covers and encloses cavity 104 (Fig. 4) containing drive mechanism 65a. Panel 102 is attached by fasteners 106 extended through spaced apart holes provided along periphery 110 of access panel 102. Walk-behind implement 20a also includes snow deflection chute positioner mechanism 112 having crank handle 114 attached to shaft 116. Shaft 116 is supported by handle cross member 118 through support bracket 120 mounted to cross member 118. Crank plate 122 is secured to axial end 124 of shaft 116 and crank handle 114 is attached to crank plate 122. Crank handle 114 is offset relative to shaft 116 to provide an adequate lever arm length such that shaft 116 may be rotated by an operator with little to moderate effort. As is customary, rotation of handle 114 causes rotation of deflection chute 38 to accordingly throw snow in a direction selected by an operator positioning positioner mechanism 112.

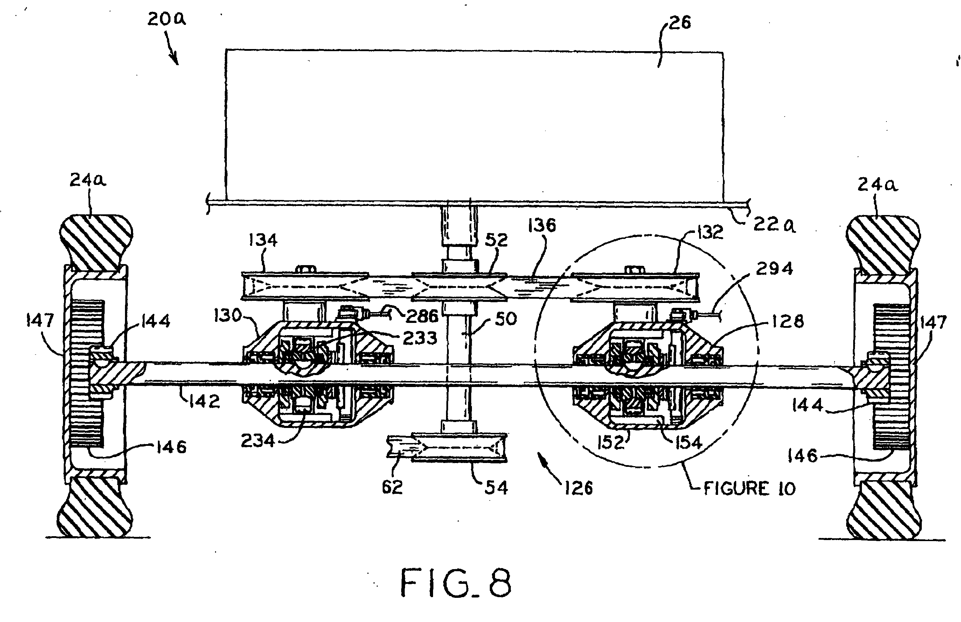

As best shown in Fig. 5A, rotation of engine output shaft 50 is transferred to rotation of wheels 24 through wheel drive mechanism 126. Wheel drive mechanism 126 includes first and second transmission modules 128 and 130 having respective drive shafts 131 and 133. Transmission modules 128 and 130 are each similar to commercially-available Model 301 transmissions manufactured by Tecumseh Products Company. Pulleys 132 and 134 are respectively keyed to driveshafts 131, 133. Referring to Fig. 7, belt 136 is engaged with a portion of a periphery of wheel drive pulley 52, and is additionally engaged about a portion of peripheries of pulleys 132 and 134 of first and second transmission modules 128 and 130. A fixed tensioner pulley 138 is rotatably mounted to frame 22a and positioned between wheel drive pulley 52 and pulley 132 of first transmission module 128. Tensioner pulley 138 is adjustably fixed such that a predetermined tension may be exacted on belt 136 during assembly of walk-behind implement 20a. First and second transmission modules 128 and 130 share a common axle 142 and axle 142 includes first and second ends each of which include a gear 144 attached thereto (Fig. 8).

First and second transmission modules 128 and 130 are respectively provided with actuator levers 148 and 150 each of which, when rotated, provides engagement of drive shaft 131 or 133 with drive engaging wheels 24 through the respective transmission module. Actuator levers 148 and 150 are alternately, rotatably displaced through operator manipulation of control assembly 32 as hereinafter described. It may be seen that rotation of axle 142 causes rotation of gears 144 which are meshed with a pair of wheel gears 146 fixed to respective hubs 147 of wheels 24 (Fig. 8).

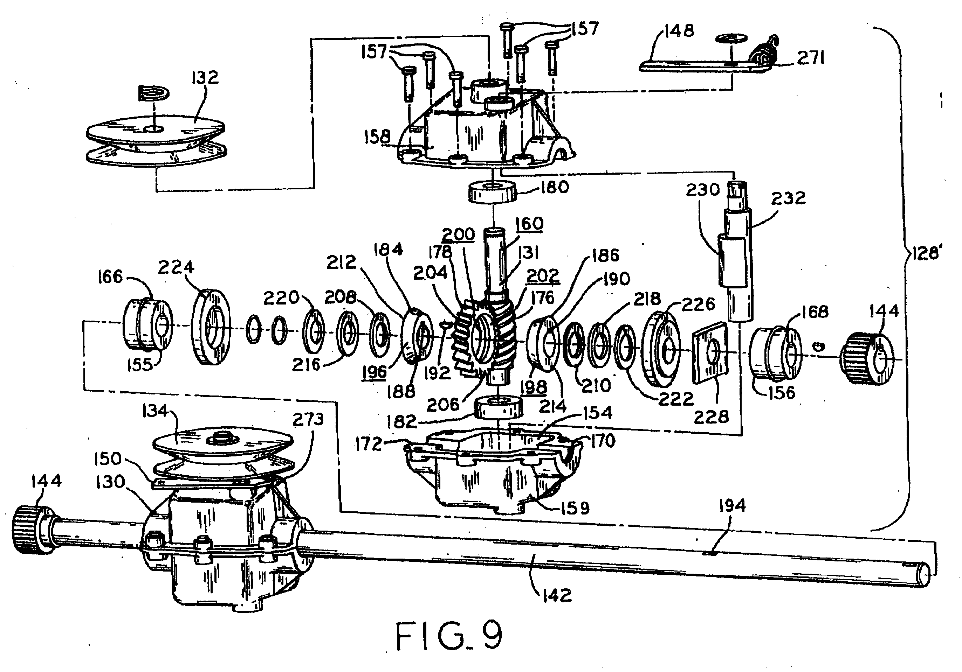

Referring to Fig. 8, first transmission module 128, which is similar to second transmission module 130, includes housing 152 having sealed internal cavity 154 containing lubrication fluid (e.g. oil) therein. Referring to Figs. 9-10, a shaft seal (not shown), such as an O-ring seal, for example, is captured within a recessed portion of housing half 158 to seal surface 160 of drive shaft 131 and sealably encloses cavity 154 of housing 152. A pair of seals 162, 164 provide a lubrication barrier between axle 142 and housing 152 and a seal is included in each respective sleeve assembly 166, 168 to prevent oil within cavity 154 from escaping housing 152. Housing seal 170 is provided between housing halves 158 and 159 to seal housing cavity 154 at interface 172 (Fig. 9). Oil fill plug (not shown) is removably attached to upper housing half 158 to allow for introduction or removal of oil into housing 152.

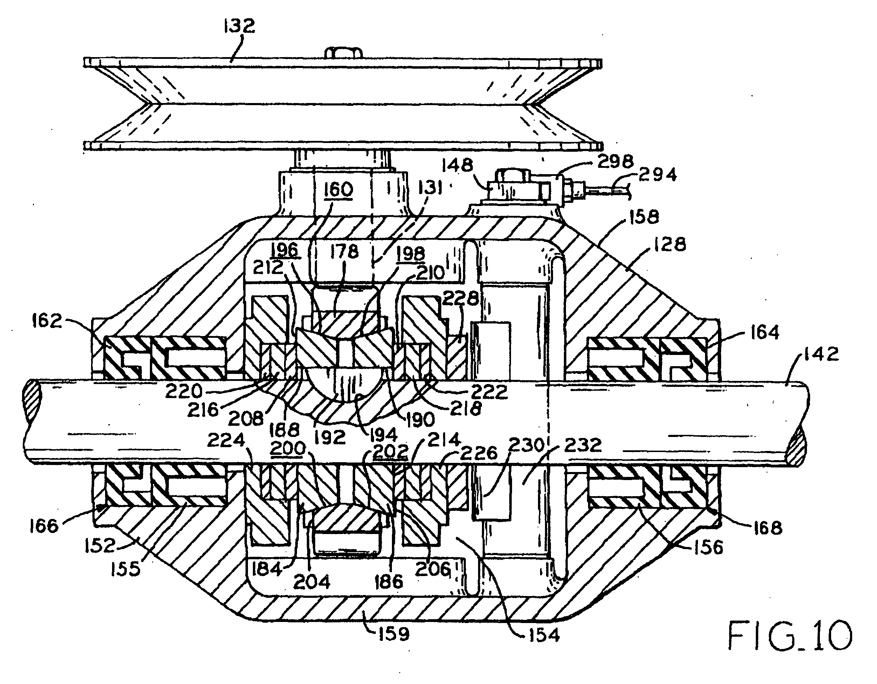

Transmission module 128 includes external actuator lever 148 which, when rotated by an operator through cable linkage, causes the transmission drive shaft 131 to become operatively coupled with axle 142. Referring to Fig. 9, drive shaft 131 includes right hand worm portion 176, to cause forward rotation of axle 142. Worm portion 176 is located on outer surface 160 of drive shaft 131, and is intermeshed with right hand worm gear 178. Ball bearing assemblies 180, 182 are respectively fitted within housing halves 158 and 159 to rotatably support drive shaft 131. Ball bearing assemblies 155, 156 are captured between housing halves 158, 159 to rotatably support axle 142. Housing halves 158, 159 are fastened together by screws 157. A pair of cone clutches 184, 186 are rotationally fixed on axle 142 by having notches 188, 190 provided therein and engaged with Woodruff key 192. Woodruff key 192 is engaged within notch 194 machined into axle 142 by a broaching operation, for example. Cone clutches 184, 186 respectively include frustoconical surfaces 196, 198 which engage complementary frustoconical surfaces 200, 202 provided on lateral sides 204, 206 of worm gear 178 (Fig. 10). Washers 208, 210 are in contact with respective butt ends 212, 214 of cone clutches 184, 186 and thrust bearings 216, 218 contact respective washers 208, 210. Washers 220, 222 contact respective thrust bearings 216, 218. Additionally, spacers 224, 226 are positioned on outermost lateral surfaces of washers 220, 222 and an actuator plate 228 is positioned intermediate spacer 226 and sleeve assembly 168. Actuator plate 228 is engaged by cam portion 230 of actuator rod 232 as rod 232 is selectively rotated by an operator through, for example, cable linkage attached to actuator lever 148.

In operation, an axial force, provided by actuator place 228 due to selective rotation of actuator lever 148 and actuator rod 232, is transmitted to cone clutches 184, 186, causing frustoconical surfaces 196, 198 of respective cone clutches 184, 186 to respectively engage frustoconical surfaces 200, 202 of worm gear 178. Rotation of actuator rod 232 operatively engages worm gear 178 and axle 142, through the clutch/worm gear interface, and axle 142 is thus driven by rotating drive shaft 131. In a fully engaged condition, surfaces 196, 198 of the cone clutches and surfaces 200, 202 of the worm gear simultaneously rotate having little or no slippage occurring therebetween. A degree of slippage initially occurs between surfaces 196, 198 of cone clutches 186, 188 and surfaces 200, 202 of worm gear 178 during engagement thereof, resulting in a "soft" engagement therebetween. When cone clutches 186, 188 are fully engaged with worm gear 178, the speed of axle 142, relative to the speed of drive shaft 131, is directly reduced through the engagement of worm gear 178 and worm portion 176 to produce, for example, an axle speed nine times less than the speed of drive shaft 131.

Second transmission module 130 differs from second transmission module 128 by including an oppositely configured, left hand worm portion 233 which meshes with corresponding oppositely machined gear teeth of left hand worm gear 234 (Fig. 8). Thus, the drive assembly in operation provides alternate clutching engagement between first transmission module 128, resulting in reverse movement of implement 20a, and second transmission module 130, resulting in forward motion of implement 20a.

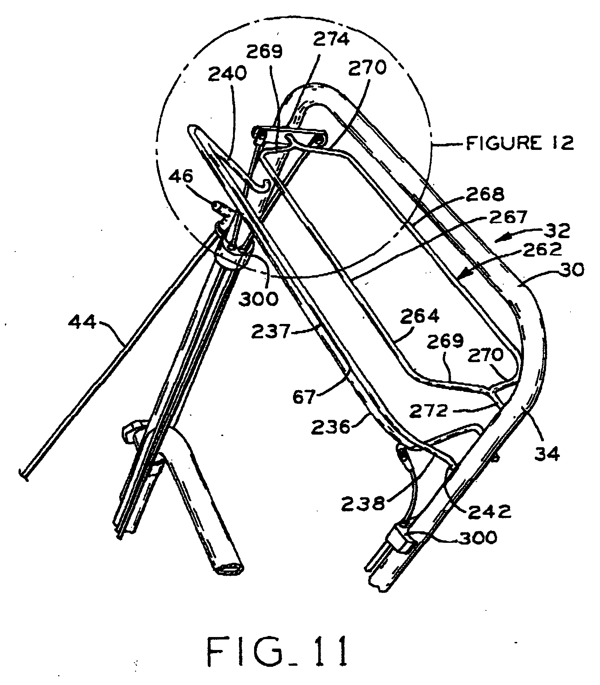

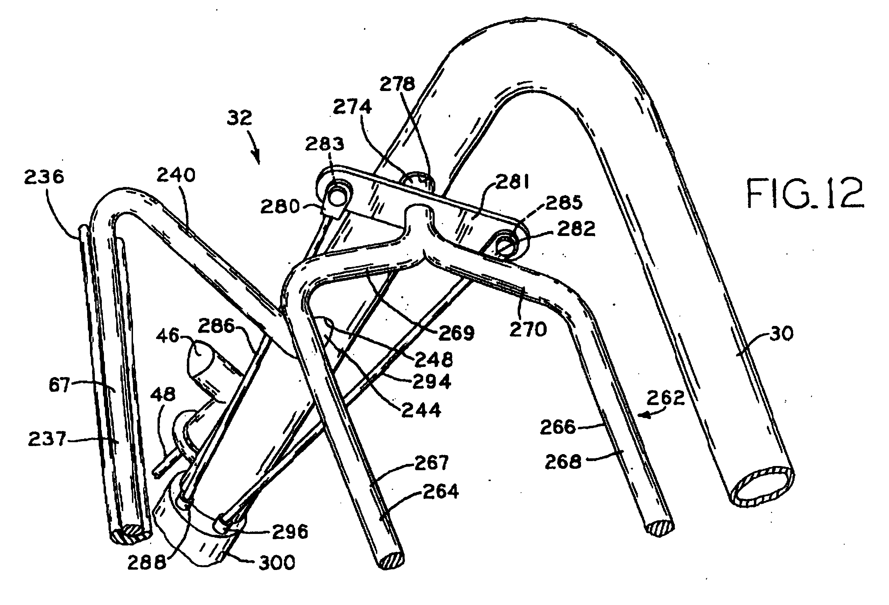

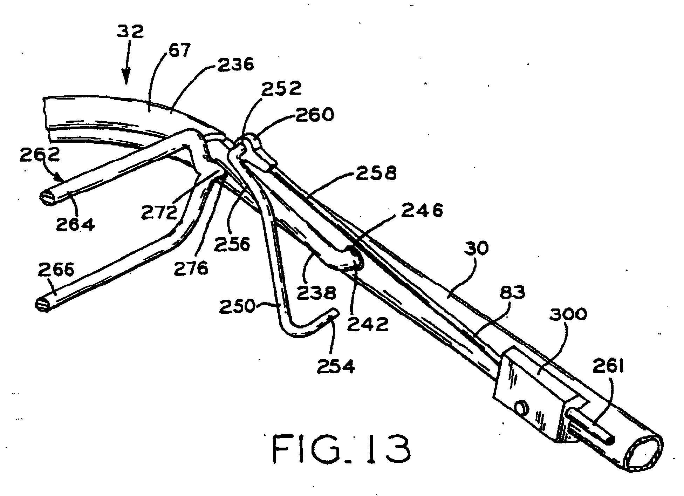

Referring to Fig. 11, it may be seen that engagement or disengagement of auger 28 (Fig. 1A) may be controlled by an operator manually pivoting U-shaped control lever 67 of control assembly 32. Lever 67 includes a grip cover 236 (Fig. 13) which extends along the length of elongate handle portion 237. A pair of side rails 238, 240 extend generally, perpendicularly relative to handle portion 237, and are each provided with first ends, which connect to the handle portion, and second ends which form pivot pins 242 and 244 (Fig. 12) which extend through respective holes 246 (Fig. 13) and 248 (Fig. 12) within handle 30.

As best shown in Fig. 13, lever 67 is also provided with linkage member 250 which includes cable post 252 at one end and a hook-shaped stop portion 254 at the opposite end. A portion 256 of linkage member 250 overlays side rail 238 and is attached to side rail through welding or brazing, for example. Cable end 260 is rotatably supported by cable post 252 of linkage member 250 and is attached to cable 258 of cable assembly 83 (Figs. 4, 13). Cable assembly 83 includes end 81 attached to auger pivot arm 66 and second end 260 attached to cable post 252 of working device actuation lever 67. Sheath 261 (Figs. 4, 13) extends along at least a portion of the length of cable 258.

Referring to Fig. 11, it may be seen that control assembly 32 includes oblong hoop-shaped wheel control member 262 which includes forward bail 264 and reverse bail 266. The forward and reverse bails respectively include elongate handle portions 267 and 268. Forward bail 264 includes a pair of side rails 269 and reverse bail 266 includes a pair of side rails 270. Side rails 269 of forward bail 264 are respectively attached to each end of elongate handle portion 267 and extend substantially perpendicularly therefrom toward reverse bail 266. Reverse bail 266 is generally a mirror image of forward bail 264 and includes side rails 270 attached at each end which extend substantially perpendicularly therefrom and toward forward bail 264. Side rails 269 join respective side rails 270 through a pair of welds, for example, and a pair of pivot posts 272 and 274 extend outwardly from the side rail joints. Pivot posts 272, 274 are generally parallel with elongate handle portions 267 and 268 of forward and reverse bails 264 and 266. A pair of opposed holes 276 (Fig. 13) and 278 (Fig. 12) are provided in handle 30 and respectively receive pivot post 272 (Fig. 13) and 274 (Fig. 12). As best seen in Fig. 12, swivel plate 281 is fixed to pivot post 274 and is located between side rails 269, 270 and handle 30. Swivel plate 281 includes first and second through holes 283 and 285, and respectively rotatable therein are ends 280 and 282 of cables 286 and 294.

Referring to Fig. 7, forward cable assembly 284 is provided with cable 286 which is covered at least partially along its length by sheath 288 and includes rear cable end 280, connected to swivel plate 281 (Fig. 12) and front cable end 290 connected to actuator lever 150 of second transmission module 130. Reverse cable assembly 292 includes cable 294 having rear end 282 connected to swivel plate 281 and front end 298 attached to actuator lever 148 of first transmission module 128. Cable sheath 296 of reverse cable assembly 292 extends at least partially along the length of cable 294. As is customary, cable clamps 300 (Figs. 11-13) may be placed in several discrete locations to ensure that each cable assembly is closely positioned, and secured, along portions of the handle.

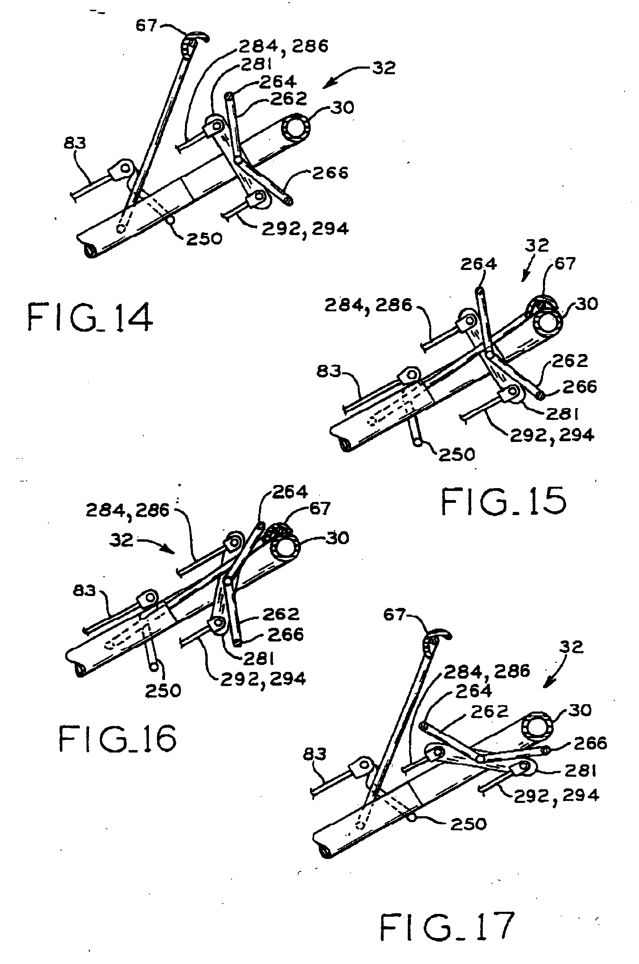

Referring to Figs. 14-18, the operation of implement 20a will now be described. Fig. 14 illustrates a neutral condition wherein the working device and wheel drive mechanisms 65a, 126 are in a neutral or non-activated condition. Accordingly, forward and reverse bails 264, 266 of wheel control member 262 are substantially equally positioned on each side of handle 30. Notably, in this position, each elongate handle portion 267 and 268 of forward and reverse bails 264, 266 is substantially equally spaced from an elongate push portion of handle 30. Extension spring 271 (Fig. 9) is attached to actuator lever 248 to cause reverse bail 266 to return to the neutral position when released. Similarly, a substantially identical extension spring 273 is attached to actuator lever 150 of second transmission module 130 to cause forward bail 264 to return to a neutral position. It may be seen that working device activation lever 67 extends significantly outward from handle 30 and is biased into position by extension spring 78 acting on pivot arm 66 (Fig. 4).

Fig. 15 represents an auger activation and wheel drive mechanism deactivation condition. It may be seen that working device activation lever 67 is swung downwardly, toward handle 30, by an operator, such that portion 237 of lever 67 is adjacently positioned to handle 30 and working device drive mechanism 65a is accordingly engaged. Accordingly, as lever 67 is swung toward handle 30, cable 258 is moved by cable post 252 (Fig. 13) of linkage member 250 from a first position corresponding to a neutral position of the transmission (Fig. 14) to a second position corresponding to an engaged position of the transmission module (Figs. 13, 15).

Referring to Fig. 16, it may be seen that the working device activation lever 67 and the wheel control member 262 are both respectively in engaged positions resulting in rotation of auger 28 and forward movement of implement 20a. The wheel control member 262, in this position, effectuates rotation of operator lever 150 of second transmission module 130 (Fig. 7) to a position in which clutching engagement and corresponding forward rotation of axle 142 is accomplished. It will be understood by those having ordinary skill in the art that manipulation of forward bail 264 which tensions cable 286 of forward cable assembly 284 simultaneously slackens or loosens of reverse cable 294 of reverse cable assembly 292 such that each first and second transmission module 128 and 130 operate mutually exclusively with respect to one another.

Referring to Fig. 17, a condition of control assembly 32 corresponding to reverse movement of implement 20a and non-engagement of auger 28 is shown. It may be seen that reverse cable 294 of reverse cable assembly 292 is displaced towards handle 30, and simultaneously, forward cable 286 of forward cable assembly 284 is decreased in tension to ensure exclusive actuation of first transmission module 128. The ability to reverse implement 20a under power, with the controls positioned as shown in Fig. 17, allows an operator to expend significantly less effort than would otherwise be required in pulling the implement backward.

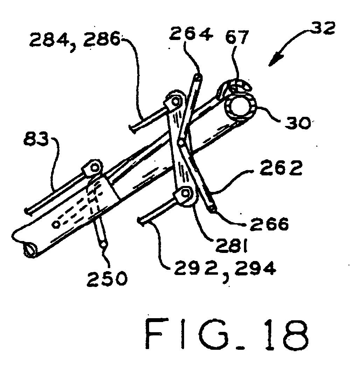

Referring to Fig. 18, working device activation lever 67 is fully engaged, and forward bail 264 of wheel control member 262 is partially engaged, such that wheel control member 262 effectuates rotation of actuator lever 150 of second transmission module 130 (Fig. 7) to a position in which a degree of slippage occurs between the complementing frustoconical surfaces of the cone clutches and the worm gear surfaces during the "soft" engagement thereof. Upon further movement of forward bail 264 of wheel control member 262, the complementing frustoconical surfaces of the cone clutches and worm gear surfaces rotate together, and the implement moves forward.

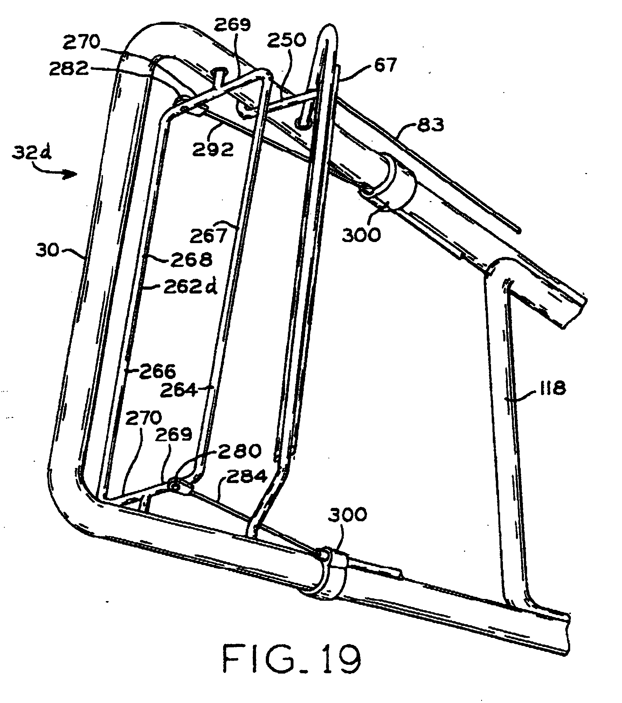

Referring to Fig. 19, a fourth embodiment of a walk-behind implement is shown which includes a modified control assembly. Control assembly 32d differs from control assembly 32 illustrated in Fig. 11 in that swivel plate 281 is eliminated and forward and reverse cable assemblies 284, 292 are directly attached to forward and reverse bails 264, 266, respectively. Specifically, rear end 280 of forward cable assembly 284 is pivotally fixed to side rail 269 of forward bail 264, and rear end 282 of reverse cable assembly 292 is pivotally fixed to side rail 270 of reverse bail 266. Rear cable ends 280, 282 may be swivel joint type ends, for example. Although shown being positioned at opposite ends of elongate wheel control member 262d, it is contemplated that forward and reverse cable assemblies 284, 292, and their associated forward and reverse cable rear ends 280, 282 may be located at the same end of elongate wheel control member 262d by being attached to respective side rails 269, 270 of forward and reverse bails 264, 266.

It is further contemplated that the wheel control member may be manipulated such that movement of bail member 266 toward handle 30 (Fig. 17) causes forward movement of implement 20a, and movement of bail member 264 toward handle 30 (Fig. 16) causes reverse motion of implement 20a; that is, cable ends 280, 282 may be reversed from the positions as described above.

While this invention has been described as having exemplary designs, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A walk-behind self-propelled implement (20a, 20b, 20c), including a frame (22a, 22b, 22c); a power source (26) mounted to said frame, said power source having a rotating output shaft (50); an axle (142) rotatably supported by said frame; and at least one drive wheel (24a, 24b, 24c) attached to said axle; **characterized in that** said implement further includes a first transmission module (128) associated with said axle and operable to transfer rotation of said output shaft to said axle in a forward direction; and a second transmission module (130) associated with said axle and operable to transfer rotation of said output shaft to said axle in a reverse direction, wherein said first and second transmission modules are operable exclusively of one another.

2. The implement of Claim 1, **characterized in that** each of said first and second transmission modules (128, 130) includes clutch surfaces (196, 198, 200, 202) selectively engageable with one another to transfer rotation of said output shaft (50) to said axle (142).

3. The implement of Claim 1, **characterized by** a control mechanism (32) connected to said frame (22a, 22b, 22c), said control mechanism operable to actuate said clutch surfaces (196, 198, 200, 202) of said first and second transmission modules (128, 130) exclusively of one another.

4. The implement of Claim 1, **characterized in that** each of said first and second transmission modules (128, 130) includes a pair of casings (158, 159) sandwiching said axle (142) therebetween, respective said casing pairs including bearings (155, 156) rotatably supporting said axle.

5. The implement of Claim 1, **characterized in that** each of said first and second transmission modules (128, 130) includes an input shaft (131, 133) having a worm portion (176) and a worm gear (178) rotatable with respect to said axle (142), said worm portion engaging said worm gear to transfer rotation therebetween.

6. The implement of Claim 5, **characterized in that** each of said first and second transmission modules (128, 130) further includes clutch surfaces (196, 198, 200, 202) selectively engageable to transfer rotation from said worm gear (178) to said axle (142).

7. The implement of Claim 5, **characterized in that** said first transmission module (128) includes a right hand worm portion (176) and a right hand worm gear (178), and said second transmission module includes a left hand worm portion (176) and a left hand worm gear (178).

8. The implement of Claim. 1, **characterized in that** said implement comprises a snow thrower (20a, 20b), said snow thrower including an auger assembly connected to said frame (22a, 22b), said auger assembly including a rotatable auger (28) driven from said output shaft (50).

9. The implement of Claim 8, **characterized in that** said auger (28) is driven from said output shaft (50) through a belt drive (65a, 65b), said belt drive including a tensioning mechanism operable to engage said belt drive to transfer rotation of said output shaft to said auger.

10. The implement of Claim 1, **characterized in that** said implement comprises a lawnmower (20c), said lawnmower including a blade (19) connected to said output shaft (50) and rotatable therewith.

11. A walk-behind self-propelled implement (20a, 20b, 20c), including a frame (22a, 22b, 22c); a handle (30) attached to said frame; a power source (26) mounted to said frame; an axle (142) rotatably supported by said frame, said power source drivingly coupled to said axle; and at least one drive wheel (24a, 24b, 24c) attached to said axle; **characterized in that** said implement further includes a control member (262) rotatably attached to said handle, said control member including a forward bail member (264) pivotable to rotate said control member in a first direction to urge said wheel to rotate in a forward direction, and a reverse bail member (266) pivotable to rotate said control member in a second direction opposite said first direction to urge said wheel to rotate in a reverse direction.

12. The implement of Claim 11, **characterized by** a first transmission module (128) associated with said axle (142) and controllable only by said forward bail member (264), and a second transmission module (130) associated with said axle and controllable only by said reverse bail member (266), said first and second transmission modules operable exclusively of one another.

13. The implement of Claim 12, **characterized in that** each of said first and second transmission modules (128, 130) include a pair of clutch surfaces (196, 198, 200, 202) selectively engageable with one another to drivingly couple said power source (26) to said axle (142).

14. The implement of Claim 12, **characterized by** first (286) and second (294) cables respectively connected between said forward (264) and reverse (266) bail members and said first and second transmission modules (128, 130), said first and second cables translatable by pivoting of said forward and reverse bail members to actuate said first and second transmission modules.

15. The implement of Claim 12, **characterized in that** said implement comprises a snow thrower (20a, 20b), said snow thrower including an auger assembly connected to said frame (22a, 22b), said auger assembly including a rotatable auger (28) drivingly coupled to said output shaft (50).

16. The implement of Claim 15, **characterized in that** said auger (28) is driven from said power source (26) through a belt drive (65a, 65b), said belt drive including a tensioning mechanism operable to engage said belt drive to transfer power from said power source to said auger.

17. The implement of Claim 12, **characterized in that** said implement comprises a lawnmower (20c), said lawnmower including a blade (19) driven from said power source (26).
